# EUROPÄISCHE PATENTSCHRIFT

(11) **EP 2 756 210 B1**
(45) Veröffentlichungstag und Bekanntmachung des Hinweises auf die Patenterteilung: **25.05.2016**
(21) Anmeldenummer: 12762533.3
(22) Anmeldetag: 17.09.2012
(51) Int. Cl.: F16H 61/465, B60W 30/18, F16H 61/431, B60W 10/06

(54) **VERFAHREN ZUM ANSTEUERN EINES ANTRIEBS-STRANGES EINES FAHRZEUGS UND VORRICHTUNG ZUR DURCHFÜHRUNG DES VERFAHRENS**
METHOD FOR DRIVING A DRIVE TRAIN OF A VEHICLE AND APPARATUS FOR CARRYING OUT THE METHOD
PROCÉDÉ DE COMMANDE DE LA CHAÎNE CINÉMATIQUE D'UN VÉHICULE ET DISPOSITIF PERMETTANT LA MISE EN UVRE DUDIT PROCÉDÉ

(30) Priorität: 15.09.2011 DE 102011113485
(43) Veröffentlichungstag der Anmeldung: 23.07.2014
(73) Patentinhaber: BOMAG GmbH, 56154 Boppard (DE)
(72) Erfinder: LAUX, Robert, 56566Neuwied (DE); LOEW, Timo, 56154 Boppard (DE); HAMMES, Manfred, 56281 Emmelshausen (DE)
(74) Vertreter: Heidler, Philipp
(86) Internationale Anmeldenummer: PCT/EP2012/003868
(87) Internationale Veröffentlichungsnummer: WO 2013/037500

(56) Entgegenhaltungen:
- EP-A1- 1 544 440
- DE-A1-102006 017 792
- US-A- 5 277 269
- US-A1- 2001 041 645
- US-A1- 2009 238 696
- US-A1- 2009 264 252

## Beschreibung

Die Erfindung betrifft ein Verfahren zum Ansteuern eines Antriebsstranges eines Fahrzeugs, insbesondere dem Antriebsstrang einer Verdichtungsmaschine im Erdbau, wobei eine Steuerung der Fahrpumpe unabhängig von der Drehzahl des Verbrennungsmotors nach einem vorgegebenen Steuerungsprofil erfolgt, wenn ein vorgegebener Fahrbetrieb vorliegt. Die Erfindung betrifft ferner eine Vorrichtung zur Durchführung des Verfahrens sowie eine Verwendung dieses Verfahrens bei einer Bodenverdichtungsmaschine, insbesondere einem Müllverdichter, und eine Bodenverdichtungsmaschine mit einer derartigen Vorrichtung.

Bei bekannten Verdichtungsmaschinen im Erdbau mit einem hydraulischen Fahrmotor steuert eine Bedienungsperson die Leistung des Antriebsstranges über die Drehzahl eines Verbrennungsmotors. Dazu ist eine Speisepumpe mit der Abtriebswelle des Verbrennungsmotors gekoppelt, welche einen Steuerdruck proportional zur Drehzahl des Verbrennungsmotors erzeugt. Der Steuerdruck wirkt auf eine druckabhängige Fahrpumpe, welche den Fahrmotor beaufschlagt. Die Fördermenge der Fahrpumpe ist proportional zu diesem Steuerdruck, so dass die Fahrgeschwindigkeit ebenfalls proportional zur Motordrehzahl des Verbrennungsmotors ist. Die Fahrgeschwindigkeit ist somit fest an die Motordrehzahl des Verbrennungsmotors gebunden.

Es ist auch ein Verfahren zur Leistungsregelung von Verdichtungsmaschinen im Erdbau und eine entsprechende Vorrichtung aus EP 1722036 A2 bekannt. Dabei erfolgt eine hydraulische Leistungsregelung des Fahrmotors dadurch, dass in die Hydraulikhauptleitung zwischen dem Fahrmotor und einer ihn versorgenden Speisepumpe ein verstellbares Stromregelventil geschaltet ist. Mit diesem wird der dem Fahrmotor zugeführte Volumenstrom mengenmäßig proportional zu einer Steuergröße verändert, welche aus einer Messung der Bodensteifigkeit des zu verdichtenden Untergrunds abgeleitet ist.

Aus DE 4425130 A1 und DE 112008002977 T5 sind Verfahren zur Steuerung des Fahrantriebs unabhängig von der Drehzahl des Verbrennungsmotors bekannt. Aus der gattungsgemäßen US 2009/264252 A1, EP 1 544 440 A1 und US 5 277 269 A sind Verfahren bekannt, in denen die Drehzahl des Verbrennungsmotors zum Erreichen einer optimalen Funktion des Hydraulikantriebs reguliert wird.

In der Praxis muss bei bestimmten Einsatzbedingungen häufig die Fahrtrichtung oder die Beschleunigung des betreffenden Fahrzeugs verändert werden, was mit ungünstigem Kraftstoffverbrauch und hohen Verschleiß des Verbrennungsmotors verbunden ist.

Der Erfindung liegt daher die Aufgabe zu Grunde, ein Verfahren und eine Vorrichtung der eingangs genannten Art anzugeben, welche den Motorverschleiß und den Kraftstoffverbrauch verringert.

Diese Aufgabe wird verfahrensmäßig dadurch gelöst, dass die Steuerung vom zeitlichen Verlauf der Betätigung eines Fahrgebers bestimmt wird, dass das Steuerungsprofil so eingestellt ist, dass häufige Drehzahl-/ und/ oder Lastwechsel des Verbrennungsmotors vermieden werden, wobei die Drehzahl des Verbrennungsmotors innerhalb eines ersten vorgegebenen Zeitintervalls fest vorgegeben ist, dass das Steuerungsprofil so eingestellt ist, dass die Drehzahl des Verbrennungsmotors innerhalb eines zweiten vorgegebenen Zeitintervalls T2 einem vorgegebenen Verlauf folgt, und dass die vorgegebenen Intervalle so festgesetzt sind, dass beim Aufeinanderfolgen von Beschleunigen und Bremsen innerhalb eines typischen Intervalls keine Drehzahländerung erfolgt.

Vorrichtungsmäßig wird die Aufgabe dadurch gelöst, dass eingangsseitig zu einer den Fahrmotor beaufschlagenden Fahrpumpe ein Druckregelventil vorhanden ist, welches von einer Maschinensteuerung angesteuert ist, wobei in der Maschinensteuerung das Fahrprofil abgespeichert ist. Grundsätzlich kann die Erfindung bei allen Fahrzeugen eingesetzt werden, die mit einem häufigen Fahrtrichtungswechsel oder häufig wechselnden Fahrgeschwindigkeiten betrieben werden. Eine bevorzugte Verwendung des Verfahrens und der Vorrichtung ist eine selbstfahrende Verdichtungsmaschine oder ein Müllverdichter. Vorteilhafte Weiterbildungen der Erfindung sind in den abhängigen Ansprüchen beschrieben.

Das Steuerungsprofil wird statisch oder dynamisch abhängig von der Stellung des Fahrtrichtungsschalters und dem zeitlichen Verlauf des Fahrpedals ermittelt. Die Erfindung macht sich die Grundidee zunutze, den Verbrennungsmotor bei bestimmten Einsatzbedingungen bzw. bei einem bestimmten Fahrbetrieb in einem optimalen Arbeitsbereich zu betreiben, so dass der Verbrennungsmotor nicht einem wiederholten Drehzahlwechsel ausgesetzt ist, insbesondere nicht über einen großen Drehzahlbereich. Während bei herkömmlichen Steuerungen ein Anhalten und Wiederanfahren oder eine Fahrtrichtungsumkehr der betreffenden Maschine nur möglich ist, wenn die Drehzahl des Verbrennungsmotors auf Leerlaufdrehzahl abgesenkt wird, um danach wieder auf die Nenndrehzahl angehoben zu werden, bleibt erfindungsgemäß die Drehzahl des Verbrennungsmotors im optimalen Arbeitsbereich, auch wenn der Fahrmotor gestoppt oder in der Fahrtrichtung umgeschaltet wird. Auch im Teillastbereich erfolgt eine Absenkung der Motordrehzahl.

Die Erfindung hat somit den Vorteil, dass die Anzahl der Drehzahl-/ und Lastwechsel des Verbrennungsmotors verringert werden, was zu geringerem Kraftstoffverbrauch und höheren Standzeiten des Verbrennungsmotors führt. Außerdem erhöht sich der Komfort der Bedienperson, da das ansonsten übliche Durchfahren des Drehzahlbereichs als subjektiv unangenehm empfunden wird. Auch kann die betreffende Maschine bei einer vorgebbaren Drehzahl des Verbrennungsmotors oberhalb der Leerlaufdrehzahl angehalten werden, beispielsweise auch bei der Nenndrehzahl des Motors.

Eine bevorzugte Weiterbildung der Erfindung besteht darin, dass die Drehzahl des Verbrennungsmotors innerhalb eines ersten vorgegebenen Zeitintervalls fest vorgegeben ist und alternativ oder zusätzlich innerhalb eines zweiten vorgegebenen Zeitintervalls einem vorgegebenen Verlauf folgt. Dadurch ist es möglich, einerseits bei kurzzeitig auftretenden Fahrstopps oder Fahrtrichtungswechseln die Drehzahl beizubehalten und andererseits, bei etwas länger andauernden Pausen zwischen zwei Veränderungen des Fahrverhaltens die Motordrehzahl anzupassen, ohne dass größere Drehzahlschwankungen auftreten. Der Verlauf des Drehzahlwechsels innerhalb des zweiten vorgegebenen Zeitintervalls kann bevorzugt mit einer vorgegebenen Zeitverzögerung und/ oder einer vorgegebenen Abschwächung desjenigen Verlaufs vorgenommen werden, welcher auftreten würde, wenn keine erfindungsgemäße Steuerung vorhanden wäre.

Eine besonders agile Beschleunigung des betreffenden Fahrzeugs wird dadurch erreicht, dass das Steuerungsprofil so eingestellt ist, dass die Drehzahl des Verbrennungsmotors im Standbetrieb auf einen vorgegebenen Wert (Standby-Drehzahl) eingestellt wird. Die Maschine kann auf diese Weise im Vergleich zu herkömmlichen Maschinen mit erhöhter Motordrehzahl angefahren werden. Günstig ist eine Drehzahl, die etwa 80% der Nenndrehzahl des Verbrennungsmotors entspricht.

Es ist auch zweckmäßig, dass das Steuerungsprofil aus Fahrmustern eines typischen Fahrbetriebs erstellt wird. Aus der Praxis weiß man aus den Arbeitsabläufen einer Maschine, dass sich bestimmte Zyklen wiederholen, beispielsweise dass eine Maschine hintereinander wiederholt vorwärts und rückwärts fährt. Typisch ist dies zum Beispiel für einen Müllverdichter. Da man auch den zeitlichen Verlauf dieser Vorwärts-/ Rückwärtsfahrten kennt, kann man das Steuerungsprofil so einstellen, dass Drehzahlschwankungen vermieden werden.

Es erweist sich als besonders vorteilhaft, dass das Steuerungsprofil während des Betriebs der Maschine eingestellt wird. Auf diese Weise kann eine flexible Anpassung an die aktuellen Einsatzbedingungen erfolgen, beispielsweise an die Dauer von aufeinander folgenden Vorwärts-/ Rückwärtsfahrten, wechselnde Lasten oder an die Topographie, in welchem sich das betreffenden Fahrzeug bewegt, wie Steigungen, Kurven oder ähnliches.

Die Steuerung kann auf einfache Weise dadurch erfolgen, dass ein die Fördermenge bestimmender Steuerdruck in Abhängigkeit vom vorgegebenen Steuerungsprofil erzeugt wird. Das hat den Vorteil, dass die Erfindung bei an sich bekannten steuerdruckabhängige Pumpenansteuerungen eingesetzt werden kann. Somit können auch Nachrüstungen von bereits vorhandenen Maschinen kostengünstig erfolgen.

Die erfindungsgemäße Lösung der Aufgabe mittels eines Druckregelventils hat den Vorteil, dass die "hydraulische Grenzlastregelung" der Fahrpumpe erhalten bleibt. Es ist also keine elektronische Grenzlastregelung erforderlich.

Nachfolgend wird die Erfindung anhand eines Ausführungsbeispieles weiter beschrieben. Es zeigen schematisch:
- Fig. 1: einen Hydraulikplan eines Antriebsstranges einer Bodenverdichtungsmaschine;
- Fig. 2: ein Funktions-Blockschaltbild einer Steuerung einer Fahrpumpe der Bodenverdichtungsmaschine; und
- Fig. 3: Diagramme einer Fahrpedalposition, eines Verlaufs der Bewegung eines Fahrtrichtungsschalthebels sowie der zugehörigen Drehzahlen eines Verbrennungsmotors der Bodenverdichtungsmaschine.

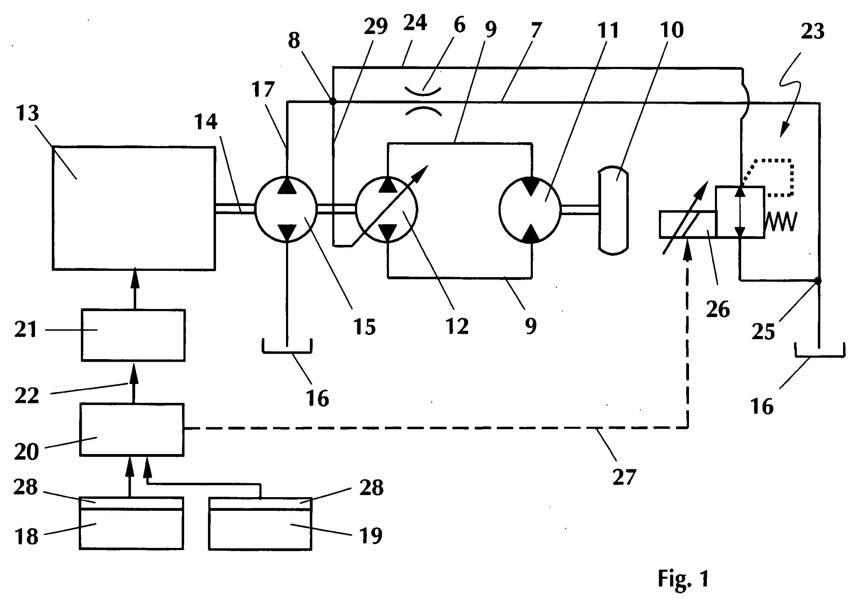

Gemäß Fig. 1 wird ein Fahrzeugrad 10 einer Bodenverdichtungsmaschine von einem Antriebsstrang angetrieben, der einen hydraulischen Fahrmotor 11, eine druckabhängige Fahrpumpe 12, eine Speisepumpe 15 sowie einen Verbrennungsmotor 13 umfasst. Die Fahrpumpe 12 führt dem Fahrmotor 11 über Leitungen 9 Hydraulikflüssigkeit zu. Die Fördermenge der Fahrpumpe 12, die proportional dem eingangsseitig in einer Steuerleitung 29 anliegenden Steuerdruck ist, bestimmt die Fahrgeschwindigkeit der Bodenverdichtungsmaschine. Der in der Steuerleitung 29 anliegende Steuerdruck wird nachfolgend als wirksamer Steuerdruck bezeichnet.

Der Verbrennungsmotor 13 treibt über eine Abtriebswelle 14 die Fahrpumpe 12 sowie die Speisepumpe 15 an. Diese fördert einen Hauptvolumenstrom einer Hydraulikflüssigkeit aus einem Tank 16 in eine Hauptleitung 17, die sich an einem Knotenpunkt 8 in die Steuerleitung 29 zur Fahrpumpe 12 und eine Rücklaufleitung 7 zum Tank 16 verzweigt. Die Speisepumpe 15 erzeugt einen Steuerdruck in der Hauptleitung 17, welcher proportional zur Drehzahl des Verbrennungsmotors 13 ist, der nachfolgend als drehzahlabhängiger Steuerdruck bezeichnet wird. Die Verbindung der Hauptleitung 17 zum Tank 16 erfolgt über eine Drossel 6.

Am Knotenpunkt 8 liegt ferner einer Druckregulierleitung 24 mit einem Druckregelventil 23, das von einer elektronischen Maschinensteuerung 20 angesteuert wird. Der in der Druckregulierleitung 24 anliegende Druck wird nachfolgend als Regulierdruck bezeichnet. Der wirksame Steuerdruck in der Steuerleitung 29 wird somit vom drehzahlabhängigen Steuerdruck in der Hauptleitung 17 und dem Regulierdruck in der Druckregulierleitung 24 bestimmt, welcher dem drehzahlabhängigen Steuerdruck überlagert ist. Durch Veränderung des Regulierdruckes ist es möglich, den wirksamen Steuerdruck und damit die Fördermenge der Fahrpumpe 12 zu verändern, ohne dass die Drehzahl des Verbrennungsmotors 13 verändert wird. Die Fahrgeschwindigkeit kann also über die Maschinensteuerung 20 unabhängig von der Drehzahl des Verbrennungsmotors 13 verändert werden.

Im vorliegenden Beispiel wird der wirksame Steuerdruck in der Steuerleitung 29 dadurch reguliert, dass der drehzahlabhängige Steuerdruck durch das Druckregelventil 23 reduziert werden kann. Zu diesem Zweck ist die Druckregulierleitung 24 über einen weiteren Knotenpunkt 25 stromabwärts des Ventils 6 mit der Rücklaufleitung 7 bzw. dem Tank 16 verbunden. Über das Druckregelventil 23 kann somit ein Druckausgleich zwischen dem wirksamen Steuerdruck am Eingang der Fahrpumpe 12 und dem Druck in der Rücklaufleitung 7 erfolgen, der dem Tankdruck entspricht. Bei einer Druckreduzierung durch das Druckregelventil 23 verringert sich der von der Speisepumpe 15 aufgebaute drehzahlabhängige Druck am Knotenpunkt 8 entsprechend, so dass lediglich der Differenzdruck in der Steuerleitung 29 anliegt, auch wenn die Pumpleistung der Speisepumpe 15, d.h. der Hauptvolumenstrom, nicht verringert wird.

Der an der druckabhängigen Fahrpumpe 12 anliegende wirksame Steuerdruck wird also vom drehzahlabhängigen Steuerdruck der Speisepumpe 15 und in einer unabhängigen Überlagerung auch vom Druckregelventil 23 bestimmt. Das bedeutet, dass die Fördermenge der Fahrpumpe 12 unabhängig von der Drehzahl des Verbrennungsmotors 13 variiert werden kann, indem der Druck in der wirksamen Steuerleitung 29 reduziert wird. Durch Öffnen des Druckregelventils 23 erfolgt eine Verringerung des Drucks in der wirksamen Steuerleitung 29 und damit eine Verringerung der Fahrgeschwindigkeit. Wenn der drehzahlabhängige Steuerdruck in der Hauptleitung 17 über das Druckregulierventil 23 vollständig abgeleitet wird, wird der wirksame Druck in der Steuerleitung 29 auf "Null" reduziert und das Fahrzeug kommt zum stehen. Wird durch entsprechende Ansteuerung des Druckregelventils 23 der wirksame Druck in der Steuerleitung 29 wieder erhöht, setzt sich die Bodenverdichtungsmaschine entsprechend dem Differenzdruck am Knotenpunkt 8 wieder in Bewegung. Die Fahrgeschwindigkeit kann also ohne Änderung der Drehzahl des Verbrennungsmotors 13 bestimmt werden.

Das Druckregelventil 23 ist in dem dargestellten Ausführungsbeispiel mit einer magnetischen Steuerspule 26 mit Anker ausgeführt und mit einer Rückstellfeder versehen. Die Steuerung des Druckregelventils 23 erfolgt über ein Steuersignal von der Maschinensteuerung 20, das über eine Steuerleitung 27 direkt mit dem Eingang der Steuerspule 26 des Drucksteuerventils 23 verbunden ist.

Über ein als Fahrgeber ausgebildetes Fahrpedal 18 und einen Fahrtrichtungs-Schalthebel 19 werden von einem Bediener die Fahrgeschwindigkeit und die gewünschte Fahrtrichtung der Bodenverdichtungsmaschine eingegeben. Der Fahrgeber kann auch als Joystick, Schieber, Rad oder ähnliches ausgebildet sein, mit welchen ein Bediener die Beschleunigung und das Abbremsen des Fahrzeugs steuert. Die Stellungen des Fahrpedals 18 und des Fahrtrichtungsschalters 19 werden von Sensoren 28 überwacht. Die betreffenden Ausgangssignale werden der elektronischen Maschinensteuerung 20 zugeführt, die einer elektronischen Motorsteuerung 21 vorgeschaltet und mit ihr beispielsweise über einen CAN-Bus 22 verbunden ist. Die Maschinensteuerung 20 steuert über die Motorsteuerung 21 die Drehzahl des Verbrennungsmotors 13 und über das Druckregelventil 23 die Fahrgeschwindigkeit, wie oben beschrieben wurde. Die Maschinensteuerung 20 wertet hierzu die Position des Fahrpedals 18 und des Fahrtrichtungsschalters 19 aus und generiert einen Sollwert für die Drehzahl des Verbrennungsmotors 13, der an die Motorsteuerung 21 gegeben wird, und generiert das Steuersignal für die Steuerspule 26 des Drucksteuerventils 23, jeweils in Abhängigkeit von einem statisch oder dynamisch ermittelten Steuerungsprofil.

Ein statisch ermitteltes Steuerungsprofil wird durch Versuche ermittelt und dann in der Maschinensteuerung abgespeichert. Während des Betriebs greift die Maschinensteuerung auf dieses vorgegebene Profil zu. Eine dynamische Ermittlung erfolgt dadurch, dass während des Betriebs der Bodenverdichtungsmaschine sich häufig wiederholende Fahr- und Beschleunigungsvorgänge und/ oder bestimme Fahrzyklen ermittelt und davon das Steuerungsprofil für den aktuellen Einsatz abgeleitet wird.

Das Steuerungsprofil beruht auf der Auswertung typischer Fahrverläufe der Bodenverdichtungsmaschine, die durch den Verlauf der Stellungsänderungen des Fahrpedals repräsentiert werden. Es bewirkt, dass bei Vorliegen eines typischen Verlaufs der Stellungsänderungen des Fahrpedals der Fahrmotor entsprechend der Stellungen des Fahrpedals angesteuert wird, dass aber die Drehzahl des Verbrennungsmotors 13 nicht zwangsläufig der Stellung des Fahrpedals 18 folgt. Vielmehr wird die Drehzahl durch das Steuerungsprofil vorgegeben.

Typische Fahrverläufe sind kurzes Beschleunigen und Bremsen sowie Wechsel zwischen Vorwärts- und Rückwärtsfahrt in häufigem Wechsel. Abhängig von diesem Verlauf werden nur bestimmte Sollwerte der Drehzahlen vorgegeben, beispielsweise eine Nenndrehzahl, eine Standby-Drehzahl und eine Leerlaufdrehzahl. Vorgegebene Stellungsänderungen des Fahrpedals 18 innerhalb eines ersten vorgegebenen Zeitintervalls führen nicht zu einer Änderung der Nenndrehzahl. Weitere vorgegebene Stellungsänderungen innerhalb eines zweiten vorgegebenen Zeitintervalls führen zur Standby-Drehzahl oder der Leerlaufdrehzahl. Mit dem Steuerungsprofil erfolgt eine Glättung des Verlaufs der Drehzahlschwankungen, weil eine vorgegebene hohe Frequenz von Stellungsänderun-gen des Fahrpedals 18 keine Drehzahländerung zur Folge hat, anders als bei herkömmlichen Steuerungen. Das Steuerungsprofil wählt die vorgegebenen Zeitintervalle auf Grund typischer Beschleunigungs- und Bremsvorgänge sowie Vorwärts- und Rückwärtsfahrten bei einem Arbeitseinsatz der Bodenverdichtungsmaschine. Die Intervalle sind dabei so festgesetzt, dass beim Aufeinanderfolgen von Beschleunigen und Bremsen innerhalb eines typischen Intervalls keine Drehzahländerung erfolgt oder Drehzahländerungen verzögert werden, bevorzugt in vorgegebenen Stufen.

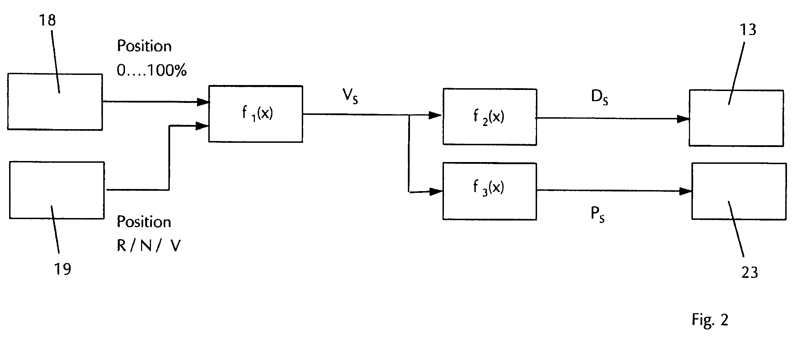

Gemäß Fig. 2 beruht die Steuerung auf folgenden Funktionen. Es wird laufend die aktuelle Position des Fahrpedals 18 ermittelt, d.h., es wird festgestellt, ob das Fahrpedal 18 überhaupt betätigt ist und in welchem Maß das Fahrpedal 18 gegebenenfalls betätigt ist. Daraus ergeben sich Werte, welche von minimal 0% bis maximal 100% beschrieben werden können. In Verbindung mit einem Wert, welcher aus der Position des Fahrtrichtungsschalters 19 abgeleitet wird, wird in einer ersten Funktion f₁(x) ein Geschwindigkeits-Sollwert V_{S} ermittelt.

Der Geschwindigkeits-Sollwert V_{S} unterliegt jeweils einer zweiten und dritten Funktion f₂(x), f₃(x). Zum einen wird daraus gemäß der zweiten Funktion f₂(x) ein Drehzahlsignal D_{S} zum Ansteuern des Verbrennungsmotors 13 abgeleitet. Zum anderen wird abhängig vom Geschwindigkeitssollwert V_{S} und der Drehzahl des Dieselmotors (d.h. des Verbrennungsmotors) ein Sollwert P_{S} zum Ansteuern des Druckregelventils 23 generiert.

Mit der zweiten Funktion f₂(x) zur Erzeugung des Drehzahlsignals D_{S} wird auch eine Signalverzögerung erzeugt, d.h. das Drehzahlsignal D_{S} wird erst nach einer gewissen Verzögerungszeit (Totzeit) am Verbrennungsmotor 13 wirksam. Dadurch wird ereicht, dass die Drehzahl des Verbrennungsmotors 13 nicht jeder Betätigung des Fahrpedals 18 folgt. Vielmehr werden Betätigungen des Fahrpedals 18, die innerhalb der vorgegebenen Zeitabschnitte erfolgen, herausgefiltert und die Drehzahl des Verbrennungsmotors 18 unterliegt dadurch entsprechend weniger Schwankungen. Die Steuerung beinhaltet also auch die Filterfunktion eines Tiefpasses, derzufolge nur Betätigungen des Fahrpedals 18 wirksam werden, die nicht innerhalb vorgegebener Zeitspannen erfolgen.

Außerdem werden bei dieser zweiten Funktion wahlweise vorgebbare konstante Drehzahl-Werte berücksichtigt, die für wahlweise vorgebbare Zeitabschnitte eingehalten werden.

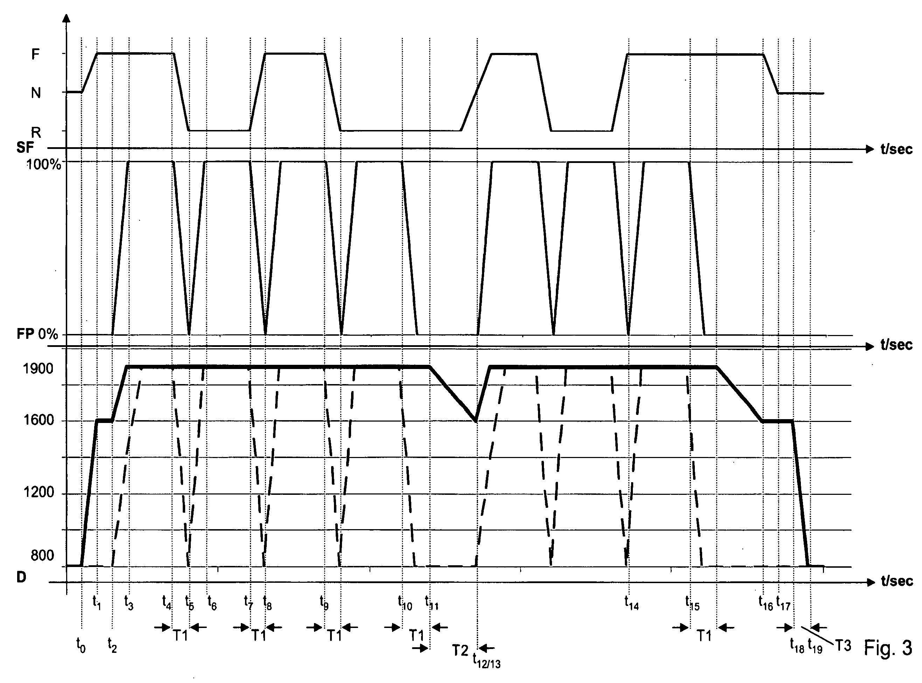

Das Steuerungsprofil wird anhand eines Beispiels anhand der Diagramme von Fig. 3 weiter erläutert, in welchen der Verlauf der Fahrpedalposition FP anhand seiner Auslenkung in %, die Stellung des Fahrtrichtungsschalters SF in Vorwärts-, Rückwärts- und Neutralstellung sowie die Drehzahl D des Verbrennungsmotors in Umdrehungen pro Minute (n/rpm) über der Zeit in Sekunden (t/s) dargestellt sind.

Die Stellung SF des Fahrtrichtungsschalters über dem zeitlichen Verlauf FP der Fahrpedalposition veranschaulichen einen typischen Fahrverlauf der Bodenverdichtungsmaschine mit häufigen Reversierfahrten. Der Fahrtrichtungsschalter der Bodenverdichtungsmaschine wird zum Zeitpunkt t0 zunächst aus der Neutralstellung N und bei Leerlaufdrehzahl des Verbrennungsmotors (hier 800 rpm) in die Stellung Vorwärtsfahrt F geschaltet. Daraufhin wird die Drehzahl D gesteuert von der Maschinensteuerung 20 (Fig. 1) erhöht, bis sie zum Zeitpunkt t1 eine Standby-Drehzahl (hier 1600 rpm) erreicht, ohne dass das Fahrpedal gedrückt zu werden braucht. Zum Anfahren wird anschließend zum Zeitpunkt t2 das Fahrpedal gedrückt und von Stellung 0 % in die Stellung 100 % gebracht, wobei die Drehzahl des Verbrennungsmotors erhöht und das Fahrzeug vorwärts beschleunigt wird, bis es zum Zeitpunkt t3 seine Nenndrehzahl (hier 1900 rpm) und seine Endgeschwindigkeit erreicht hat. Das Fahrpedal bleibt in seiner maximalen Stellung gedrückt und das Fahrzeug fährt mit konstanter Geschwindigkeit vorwärts, bis zum Zeitpunkt t4 das Fahrpedal in die Stellung 0 % zurückgeführt wird, und das Fahrzeug gebremst wird. Zum Zeitpunkt t5 wird dann der Fahrtrichtungsschalter auf Rückwärtsfahrt R gelegt. Daraufhin wird das Fahrzeug durch Drücken des Fahrpedals rückwärts fahrend beschleunigt, bis es zum Zeitpunkt t6 mit konstanter Geschwindigkeit rückwärts fährt. Dann wird es zum Zeitpunkt t7 durch Zurücknehmen des Fahrpedals auf 0 % wieder abgebremst und zum Zeitpunkt t8 wird der Fahrtrichtungsschalter wieder auf Vorwärtsfahrt F gelegt. Die Vorwärts- und Rückwärtsfahrt wird nun nach dem gleichen zeitlichen Muster wiederholt, was zum Beispiel typisch für den Arbeitseinsatz eines Müllverdichters ist. Das Zeitintervall zwischen dem Einleiten der Bremsung, d.h., wenn das Fahrpedal die 100 % Position verlässt, bis zum Zeitpunkt, wenn die anschließende Beschleunigung abgeschlossen ist, d.h., wenn das Fahrpedal wieder auf Stellung 100 % steht, liegt typischerweise bei ca. 2 bis 3 sec.

Bei einer herkömmlichen Drehzahlsteuerung würde das wiederholte Anfahren und Bremsen gemäß strichpunktierter Linie zu einer viermaligen Drehzahlerhöhung bis zu einer Nenndrehzahl von hier 1900 rpm und vier Drehzahlabfällen auf die Leerlaufdrehzahl führen. Die erste Drehzahlerhöhung wäre ausgehend von der Leerlaufdrehzahl zum Zeitpunkt t2, wenn das Fahrpedal betätigt wird.

Erfindungsgemäß wird für diese Zeitspanne das Steuerungsprofil für die Drehzahl des Verbrennungsmotors aus dem beschriebenen Fahrverlauf folgendermaßen erstellt. Ausgehend von der Leerlaufdrehzahl wird die Drehzahl bereits beim Betätigen des Fahrtrichtungsschalters zum Zeitpunkt t1 auf eine Standby-Drehzahl angehoben, die sie bereits vor dem Zeitpunkt t2 erreicht, und die bevorzugt ca. 80 % der Nenndrehzahl entspricht, hier 1600 rpm. Dies hat zur Folge, dass die Maschine zum Zeitpunkt t2 agiler beschleunigen kann als bei einer herkömmlichen Steuerung, da der Verbrennungsmotor bereits ein höheres Drehmoment bereit stellen kann. Außerdem wird die Nenndrehzahl zum Zeitpunkt t3 schneller erreicht als bei einer herkömmlichen Steuerung. Mit dem Beginn des Bremsens zum Zeitpunkt t4 wird die Nenndrehzahl für ein voreinstellbares erstes Zeitintervall T1 konstant beibehalten. Wenn - wie im dargestellten Beispiel - innerhalb dieses ersten Intervalls T1 das Fahrpedal zum Zeitpunkt t5 erneut betätigt wird, bleibt die Nenndrehzahl auch während des anschließenden Beschleunigens konstant. Dies trifft in Fig. 3 auf die ersten drei Bremsvorgänge zu den Zeitpunkten t4, t7 und t9 und die folgenden Beschleunigungen zu.

Wenn nach Rückstellung des Fahrpedals auf 0 %, wie zum Zeitpunkt t10, und anschließendem Ablauf des ersten Zeitintervalls T1 keine Betätigung des Fahrpedals erfolgt, wie zum Zeitpunkt t11, wird die Drehzahl innerhalb eines zweiten Zeitintervalls T2 langsam reduziert, bis sie entweder die Standby-Drehzahl erreicht, was im Beispiel zum Zeitpunkt t12 der Fall ist, oder das Fahrpedal zum Zeitpunkt t13 wieder betätigt wird. Wird das Fahrpedal zum Beschleunigen betätigt, wie im dargestellten Beispiel zum Zeitpunkt t12, wird die Nenndrehzahl wieder eingestellt. Die Standby-Drehzahl wird während des gesamten Fahrbetriebs nicht unterschritten, d.h. solange der Fahrtrichtungsschalter auf Vorwärts- oder Rückwärtsfahrt gestellt ist.

In dem dargestellten Beispiel folgen nach dem Zeitpunkt t12 eine Vorwärts- und Rückwärtsfahrt wie oben beschrieben, sowie beginnend zum Zeitpunkt t14 eine letzte Vorwärtsfahrt, die zum Zeitpunkt t15 durch Zurückstellen des Fahrpedals gebremst wird. Im anschließenden ersten Zeitintervall T1 wird keine erneute Betätigung des Fahrpedals festgestellt. Daher wird die Drehzahl auf die Standby-Drehzahl reduziert, die sie zum Zeitpunkt t16 erreicht.

In dem Beispiel wird dann zum Zeitpunkt t17 der Fahrtrichtungsschalter auf Stellung Neutral N gestellt, d.h. der Fahrbetrieb wird beendet. Daraufhin erfolgt innerhalb eines voreinstellbaren dritten Zeitintervalls T3, hier 2 sec, zum Zeitpunkt t18 eine langsame Reduzierung auf die Leerlaufdrehzahl, die zum Zeitpunkt t19 erreicht wird. Nur wenn zwischenzeitlich wieder der Fahrtrichtungsschalter betätigt wird, wird die Standby-Drehzahl wieder eingenommen.

Die Umschaltung der Drehzahl erfolgt also in vorgegebener Reihenfolge zwischen drei Stufen, nämlich der Leerlaufdrehzahl, der Standby-Drehzahl und der Nenndrehzahl.

Wird das Fahrpedal bei der Stellung Neutral N des Fahrtrichtungsschalters betätigt, so wird die Drehzahl des Verbrennungsmotors von der Maschinensteuerung ohne Verwendung des Steuerungsprofils eingestellt. Ferner kann die Verwendung des Steuerungsprofils wahlweise abgeschaltet werden, beispielsweise zu Wartungs- und Reparaturarbeiten.

## Patentansprüche

1. Verfahren zum Ansteuern eines Antriebsstranges eines Fahrzeugs, insbesondere des Antriebsstranges einer Verdichtungsmaschine für den Erdbau, wobei eine Verstellung einer von einem Verbrennungsmotor (13) angetriebenen Fahrpumpe (12) erzeugt wird, und wobei eine Steuerung des Antriebsstranges unabhängig von der Drehzahl des Verbrennungsmotors nach einem vorgegebenen Steuerungsprofil erfolgt, wenn ein vorgegebener Fahrbetrieb vorliegt,
**dadurch gekennzeichnet,**
**dass** die Steuerung vom zeitlichen Verlauf der Betätigung eines Fahrgebers (18) bestimmt wird, dass das Steuerungsprofil so eingestellt ist, dass häufige Drehzahl-/ und/ oder Lastwechsel des Verbrennungsmotors vermieden werden, wobei die Drehzahl des Verbrennungsmotors innerhalb eines ersten vorgegebenen Zeitintervalls (T1) fest vorgegeben ist, dass das Steuerungsprofil so eingestellt ist, dass die Drehzahl des Verbrennungsmotors innerhalb eines zweiten vorgegebenen Zeitintervalls (T2) einem vorgegebenen Verlauf folgt, und dass die vorgegebenen Intervalle so festgesetzt sind, dass beim Aufeinanderfolgen von Beschleunigen und Bremsen innerhalb eines typischen Intervalls keine Drehzahländerung erfolgt.

2. Verfahren nach Anspruch 1,
**dadurch gekennzeichnet,**
**dass** das Steuerungsprofil so eingestellt ist, dass die Drehzahl des Verbrennungsmotors im Fahrbetrieb nicht unter einen vorgegebenen Wert abgesenkt wird.

3. Verfahren nach Anspruch 1, bei welchem ein drehzahlabhängiger Steuerdruck für eine druckabhängige Fahrpumpe eines Fahrmotors erzeugt wird,
**dadurch gekennzeichnet,**
**dass** das Steuerungsprofil aus Fahrmustern eines typischen Fahrbetriebs erstellt wird.

4. Verfahren nach Anspruch 3,
**dadurch gekennzeichnet,**
**dass** das Steuerungsprofil unter Berücksichtigung von häufigen Reversierfahrten erstellt wird.

5. Verfahren nach einem der vorhergehenden Ansprüche,
**dadurch gekennzeichnet,**
**dass** ein die Fahrpumpe bestimmender Steuerdruck in Abhängigkeit vom vorgegebenen Steuerungsprofil erzeugt wird.

6. Verfahren nach Anspruch 5,
**dadurch gekennzeichnet,**
**dass** der von der Drehzahl des Verbrennungsmotors abhängige, die Fahrpumpe bestimmender Steuerdruck in Abhängigkeit vom Steuerungsprofil verringert wird.

7. Vorrichtung zur Durchführung des Verfahrens nach Anspruch 1,
**dadurch gekennzeichnet,**
**dass** eingangsseitig zu einer ein Fahrmotor (11) beaufschlagenden Fahrpumpe (12) ein Druckregelventil (23) vorhanden ist, welches von einer Maschinensteuerung (20) angesteuert ist, und das in der Maschinensteuerung (20) ein Fahrprofil abgespeichert ist.

8. Vorrichtung nach Anspruch 7,
**dadurch gekennzeichnet,**
**dass** das Druckregelventil (23) zwischen dem Eingang der Fahrpumpe (12) und einem Vorratstank (16) für die Hydraulikflüssigkeit liegt.

9. Vorrichtung nach einem der Ansprüche 7 oder 8,
**dadurch gekennzeichnet,**
**dass** Sensoren (24) zur Überwachung eines Fahrtrichtungsschalters (18) und/ oder eines Fahrpedals (18) vorhanden sind, die ausgangsseitig mit der Maschinensteuerung (20) verbunden sind.

10. Bodenverdichtungsmaschine für den Erdbau, mit einem Antriebsstrang, der einen Verbrennungsmotor und eine Fahrpumpe aufweist,
**dadurch gekennzeichnet,**
**dass** eine Steuerung vorhanden ist, welche die Fahrpumpe (12) unabhängig von der Drehzahl des Verbrennungsmotors (13) ansteuert, wenn ein vorgegebener Fahrbetrieb vorliegt, und dass in der Steuerung ein vorgegebenes Steuerungsprofil abgespeichert ist, wobei das Steuerungsprofil Zeitintervalle aufgrund typischer Beschleunigungs- und Bremsvorgänge sowie Vorwärts- und Rückwärtsfahrten bei einem Arbeitseinsatz der Bodenverdichtungsmaschine wählt und die Intervalle dabei so festgesetzt sind, dass beim Aufeinanderfolgen von Beschleunigen und Bremsen innerhalb eines typischen Intervalls keine Drehzahländerung erfolgt.

11. Verwendung eines Verfahrens nach Anspruch 1 bei einer Verdichtungsmaschine für den Erdbau.

12. Verwendung eines Verfahrens nach Anspruch 1 bei einem Müllverdichter.

## Claims

1. A method for controlling a power train of a vehicle, more particularly the power train of a compacting machine used in earth moving operations, wherein an adjustment of a travel pump (12) driven by an internal combustion engine (13) is made and in which control of the power train takes place independently of the rotational speed of the internal combustion engine according to a specified control profile when a specified driving operation is carried out,
**characterized in that**
the control is determined by the chronological sequence of the actuation of an accelerator pedal (18),
that the control profile is set such that frequent changes in the rotational speed of the internal combustion engine and/or of the load thereon are avoided, the rotational speed of the internal combustion engine being fixedly specified over a first specified time interval (T1), that the control profile is set such that the rotational speed of the internal combustion engine follows a specified profile over a second specified time interval (T2), and that the specified intervals are set such that during the succession of accelerating and braking operations within a typical interval there is no rotational speed change.

2. The method according to claim 1,
**characterized in that**
the control profile is set such that the rotational speed of said internal combustion engine does not fall below a preset value during travel operation.

3. The method according to claim 1, in which a rotational speed dependent control pressure is produced for a pressure dependent travel pump of a travel motor,
**characterized in that**
the control profile is produced from travel patterns of a typical travel operation.

4. The method according to claim 3,
**characterized in that**
the control profile is produced in consideration of frequent reverse travel operations.

5. The method according to any one of the preceding claims,
**characterized in that**
a control pressure determining the travel pump is produced as a function of the specified control profile.

6. The method according to claim 5,
**characterized in that**
the control pressure governed by the rotational speed of the internal combustion engine and determining the travel pump is reduced as a function of the control profile.

7. A device for carrying out the method according to claim 1,
**characterized in that**
on the input side of a travel pump (12) acting on a travel motor (11) a pressure regulating valve (23) is present which is controlled by a machine control system (20), and that a travel profile is stored in the machine control system (20).

8. The device according to claim 7,
**characterized in that**
the pressure regulating valve (23) is located between the input of the travel pump (12) and a storage tank (16) for the hydraulic fluid.

9. The device according to any one of claims 7 or 8,
**characterized in that**
sensors (24) for monitoring a travel direction switch (18) and/or an accelerator pedal (18) are provided, which are connected at the output side to the machine control system (20).

10. A ground compacting machine for earth moving operations, with a power train comprising an internal combustion engine and a travel pump,
**characterized in that**
a control system is present which controls the travel pump (12) independently of the rotational speed of the internal combustion engine (13) when a specified driving operation is carried out, and that a specified control profile is stored in the control system, the control system selecting time intervals based on typical accelerating and braking operations and on forward and reverse travel operations during a working operation of the ground compacting machine, and the time intervals are set such that during the succession of accelerating and braking operations within a typical interval there is no rotational speed change.

11. The use of a method according to claim 1 on a compacting machine for earth moving operations.

12. The use of a method according to claim 1 on a landfill compactor.

## Revendications

1. Procédé de commande d'un groupe motopropulseur d'un véhicule, et plus particulièrement du groupe motopropulseur d'un engin de compactage utilisé dans des opérations de terrassement, dans lequel un réglage d'une pompe d'entraînement (12) entraînée par un moteur (13) à combustion interne est effectué et dans lequel la commande du groupe motopropulseur se fait indépendamment de la vitesse de rotation du moteur à combustion interne, selon un profil de commande déterminé lorsqu'une opération de déplacement préétablie est effectuée,
**caractérisé en ce que**
la commande est déterminée par la séquence chronologique de l'enclenchement d'une pédale (18) d'accélérateur,
**en ce que** le profil de commande est établi de telle sorte que des changements fréquents de la vitesse de rotation du moteur à combustion interne et/ou de la charge appliquée sur celui-ci soient évités, la vitesse de rotation du moteur à combustion interne étant préétablie de manière fixe pendant un premier intervalle de temps préétabli (T1), **en ce que** le profil de commande est établi de telle sorte que la vitesse de rotation du moteur à combustion interne suive un profil préétabli pendant un deuxième intervalle de temps préétabli (T2), et **en ce que** les intervalles de temps préétablis soient fixés de telle sorte que, pendant la succession d'opérations d'accélération et de freinage dans un intervalle type, il n'y ait pas de changement de vitesse de rotation.

2. Procédé selon la revendication 1,
**caractérisé en ce que**
le profil de commande est établi de telle sorte que la vitesse de rotation dudit moteur à combustion interne ne tombe pas au-dessous d'une valeur prédéterminée pendant une opération de déplacement.

3. Procédé selon la revendication 1, dans lequel une pression de commande dépendant de la vitesse de rotation est produite pour une pompe d'entraînement sous dépendance de la pression d'un moteur d'entraînement,
**caractérisé en ce que**
le profil de commande est produit à partir de schémas de déplacement d'une opération de déplacement type.

4. Procédé selon la revendication 3,
**caractérisé en ce que**
le profil de commande est produit en prenant en compte de fréquentes opérations de déplacement en marche arrière.

5. Procédé selon l'une quelconque des revendications précédentes,
**caractérisé en ce que**
une pression de commande régissant la pompe d'entraînement est produite en fonction du profil de commande préétabli.

6. Procédé selon la revendication 5,
**caractérisé en ce que**
la pression de commande gouvernée par la vitesse de rotation du moteur à combustion interne et régissant la pompe d'entraînement est réduite en fonction du profil de commande.

7. Dispositif de mise en oeuvre du procédé selon la revendication 1,
**caractérisé en ce que**
sur le côté admission d'une pompe d'entraînement (12) agissant sur un moteur d'entraînement (11), une soupape (23) de régulation de la pression est présente, qui est contrôlée par un système (20) de commande de l'engin, et **en ce qu'**un profil de déplacement est mémorisé dans le système de commande (20) de l'engin.

8. Dispositif selon la revendication 7,
**caractérisé en ce que**
la soupape (23) de régulation de la pression est située entre l'entrée de la pompe d'entraînement (12) et un réservoir de stockage (16) du fluide hydraulique.

9. Dispositif selon l'une quelconque des revendications 7 ou 8,
**caractérisé en ce que**
des capteurs (24) pour la surveillance d'un commutateur (18) de direction de déplacement et/ou d'une pédale (18) d'accélérateur sont présents, qui sont reliés au côté sortie du système (20) de commande de l'engin.

10. Engin de compactage du sol pour des opérations de terrassement, avec un groupe motopropulseur comprenant un moteur à combustion interne et une pompe d'entraînement,
**caractérisé en ce que**
un système de commande est présent, qui commande la pompe d'entraînement (12) indépendamment de la vitesse de rotation du moteur (13) à combustion interne lorsqu'une opération de déplacement préétablie est effectuée, et **en ce qu'**un profil de commande déterminé est mémorisé dans le système de commande, le système de commande sélectionnant des intervalles de temps basés sur des opérations d'accélération et de freinage types et sur des opérations de déplacement en marche avant et en marche arrière pendant une opération de travail de l'engin de compactage du sol, et les intervalles de temps sont fixés de telle sorte que, pendant la succession d'opérations d'accélération et de freinage dans un intervalle type, il n'y ait pas de changement de vitesse de rotation.

11. Utilisation d'un procédé selon la revendication 1 sur un engin de compactage dans des opérations de terrassement.

12. Utilisation d'un procédé selon la revendication 1 sur un engin de tassement des ordures.
